# EUROPÄISCHE PATENTANMELDUNG

(11) **EP 0 859 164 A1**
(43) Veröffentlichungstag der Anmeldung: **19.08.1998**
(21) Anmeldenummer: 98102264.3
(22) Anmeldetag: 10.02.1998
(51) Int. Cl.: F16D 69/02

(54) **Reibelement, insbesondere für eine Kraftfahrzeugbremse oder eine Reibkupplung**

(30) Priorität: 15.02.1997 DE 19705802
(71) Anmelder: ITT MANUFACTURING ENTERPRISES, INC., Wilmington, Delaware 19801 (US); ITT Automotive Europe GmbH, 60488 Frankfurt (DE)
(72) Erfinder: Schmeling, Hans-Joachim, 64807 Dieburg (DE); Reuter, Manfred, 35789 Weilmünster (DE)
(74) Vertreter: Portwich, Peter

(57) **Zusammenfassung**

Ausgangspunkt der Erfindung sind derzeit bekannte, im wesentlichen aus Belagträger (2) und Reibbelag (3) bestehende Reibelemente (1), die innerhalb von Reibpaarungen insbesondere bei Kraftfahrzeugbremsen oder aber Reibkupplungen zum Einsatz kommen. Trotz zahlreicher und unterschiedlich gearteter Maßnahmen neigen derartige Reibelemente (1) häufig zur Entstehung von Reibgeräuschen (z.B. Bremsenquietschen), wobei solche Reibgeräusche vornehmlich bei bestimmten Verschleißsituationen etwa im Neuzustand des Reibelementes (1) auftreten. Zur Vermeidung derartiger Geräusche ist vorgesehen, den örtlichen Reibwert beispielsweise durch laminaren Aufbau des Reibbelages (3) in Abhängigkeit vom Reibbelagverschleiß variabel und zielgerichtet zu gestalten. Dadurch ergibt sich eine erhebliche Reduzierung der entstehenden Reibgeräusche. In Erweiterung dieses Gedankens besteht die Möglichkeit der Überlagerung der variablen Reibwertgestaltung in Abhängigkeit von Reibbelagverschleiß mit einer Aufteilung der jeweiligen Reibfläche in mehrere Reibzonen mit jeweils unterschiedlichem Reibwert.

## Beschreibung

Die Erfindung betrifft ein Reibelement einer Reibpaarung, das insbesondere für den Einsatz in einer Kraftfahrzeugbremse oder aber einer Reibkupplung geeignet ist. Solche Reibelemente sind häufig als Kupplungsscheibe bzw. als Bremsbacke ausgebildet und bestehen üblicherweise aus einem Belagträger sowie einem darauf aufgebrachten Reibbelag.

Bei derartigen bekannten Reibelementen treten nicht selten, selbst bei gezielter Auslegung der Reibbelageigenschaften, unerwünschte Geräusche auf (insbesondere Bremsenquietschen). Die allgemeine Tendenz eines verstärkten Auftretens von Geräuschen durch die Reibpaarung ergibt sich in besonderem Maße bei der Verwendung von neuwertigen Reibelementen, da in diesem Fall oft eine für die Geräuschentstehung kritische Reibpaarung vorliegt. Im Stand der Technik versucht man diesem Problem zu begegnen, indem man innerhalb der Reibfläche Bereiche mit unterschiedlichem Reibwert vorsieht.

Beispielsweise beschreibt die DE 40 03 336 A1 eine Bremsbacke mit Belagträgerplatte und Reibbelag, wobei die Reibbelagfläche in Zonen unterteilt ist, die einen unterschiedlichen Reibwert aufweisen. Damit soll speziell die geräuschdämpfende Wirkung einer solchen Bremsbacke verbessert werden.

Die DE 41 40 220 A1 offenbart eine Bremsbacke mit Reibbelag und Belagträger, bei der ebenfalls die Reibbelagfläche in Bereiche mit unterschiedlichem Reibwert aufgeteilt ist. Die Bereiche sind dabei im wesentlichen in Form konzentrischer-Ringsegmente angeordnet und sollen in erster Linie dafür Sorge tragen, daß eine gleichmäßige Einleitung der umgesetzten Bremsenergie in die Bremsscheibe erreicht wird. Beide beschriebenen Dokumente beschreiben lediglich eine Aufteilung der Reibbelagfläche in Zonen mit unterschiedlichem Belagreibwert und berücksichtigen nicht die spezielle Problemstellung einer kritischen Reibpaarung im Neuzustand des jeweiligen Reibelementes. Darüber hinaus wurde bisher den Änderungen im Reibpaarungsverhalten in Abhängigkeit des Reibbelagverschleißes sowie den daraus resultierenden Auswirkungen auf das Geräuschverhalten nur unzureichend Rechnung getragen.

Die daraus resultierende Aufgabe der Erfindung besteht darin, ein Reibelement einer Reibpaarung, insbesondere für eine Kraftfahrzeugbremse oder eine Reibkupplung anzugeben, bei dem das Geräuschverhalten des Reibelementes insbesondere durch zielgerichtete Gestaltung des Reibbelages in Abhängigkeit von seinem Verschleißgrad verbessert ist.

Gelöst wird die Aufgabe durch die Merkmalskombination des Patentanspruchs 1. Danach besitzt der auf dem Belagträger aufgebrachte Reibbelag in Abhängigkeit vom Verschleißgrad einen veränderlichen Reibwert. Damit wird in besonderem Maße das Geräuschverhalten eines derartigen Reibelementes verbessert. Eine vorteilhafte Anwendung dieser Maßnahme ergibt sich bei der Verwendung eines derartigen Reibbelages bei einer Kupplungsscheibe einer Reibkupplung bzw. einer Bremsbacke für eine Kraftfahrzeugbremse.

In einer Weiterentwicklung der Erfindung nach den Ansprüchen 4 und 5 besitzt der Reibbelag senkrecht zur Reibfläche einen laminaren Aufbau, wobei idealerweise der örtliche Belagreibwert mit zunehmendem Verschleiß des Reibbelages zunimmt. Damit läßt sich insbesondere die Geräuschanfälligkeit eines neuwertigen Reibelementes reduzieren, da allgemein die Höhe des Belagreibwertes einhergeht mit der Größe der Anfälligkeit des Reibelementes für die Geräuschentstehung (z.B. Quietschen). Der örtlich veränderte Belagreibwert in Abhängigkeit vom Belagverschleiß läßt sich nach Anspruch 6 beispielsweise durch Regulierung der örtlichen Reibbelagdichte in Abhängigkeit vom Verschleißmaß regulieren. Analog dazu kann selbstverständlich der gewünschte Reibwertverlauf über den Belagverschleiß mittels gezielt ausgewählter Werkstoffzugaben zum Reibbelagmaterial eingestellt werden.

Zur Reduzierung der Geräuschanfälligkeit eines erfindungsgemäßen Reibelementes vor allem im Neuzustand erweist es sich nach den Ansprüchen 7 und 8 als vorteilhaft, die unmittelbar oberste Reibbelagschicht mit einer porösen Struktur zu versehen bzw. die Reibbelagoberfläche mechanisch oder chemisch zu verändern (aufrauhen oder glätten). Derartige Maßnahmen führen zur Reduzierung des Belagreibwertes und verhindern somit die Entstehung von Reibgeräuschen.

In Ergänzung zur laminaren Schichtung des Reibbelages senkrecht zur Belagträgerfläche ist nach Anspruch 9 für spezielle Anwendungen vorgesehen, die einzelnen Reibbelagschichten in Sektoren mit unterschiedlichen Reibbelagreibwerten aufzuteilen. Hieraus ergeben sich zusätzliche Auswirkungen auf das Reibverhalten und die Neigung zur Geräuschentstehung eines solchen Reibelementes.

Ausführungsbeispiele der Erfindung werden anhand der Zeichnung dargestellt und im folgenden näher erläutert.

Es zeigen:
- Fig. 1: eine Bremsbacke mit einem Reibbelag, der in Verschleißrichtung unterschiedliche Reibwerte aufweist,
- Fig. 2: ein Diagramm, in dem der Belagreibwert in Abhängigkeit vom Reibbelagverschleiß für eine Bremsbacke nach Fig. 1 aufgetragen ist,
- Fig. 3: zwei Ansichten einer Bremsbacke mit einer senkrecht zur Reibfläche ausgebildeten laminaren Struktur des Reibbelages und einer zusätzlichen Aufteilung der Reibfläche in Reibzonen mit unterschiedlichem Belagreibwert.

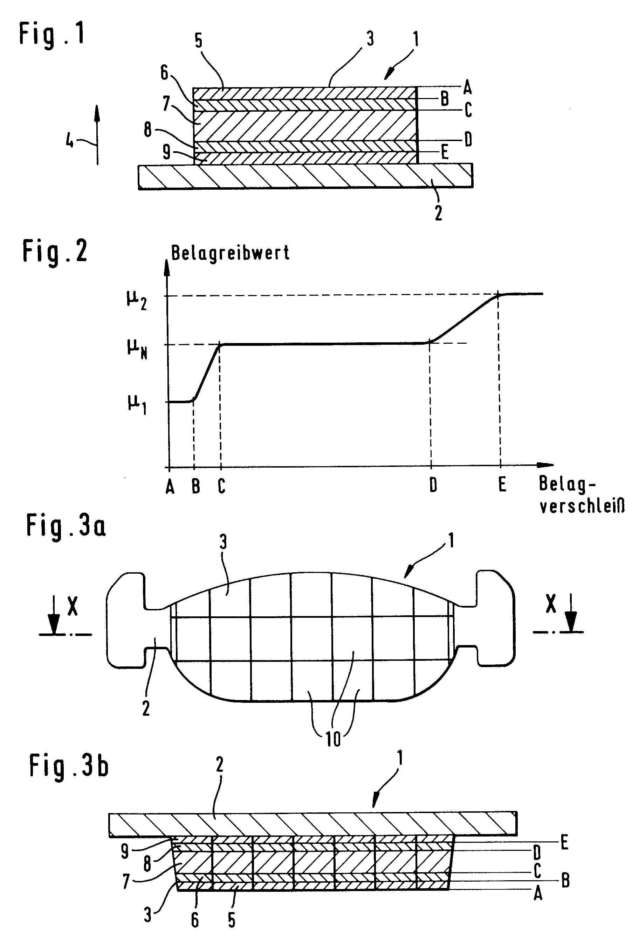

Die in Fig. 1 gezeigte Bremsbacke 1 besteht im wesentlichen aus einem Belagträger 2 sowie einem mit dem Belagträger 2 fest verbundenen Reibbelag 3. Zur Reduzierung der Geräuschanfälligkeit ist der Reibbelag 3 in Zuspannrichtung 4 der Bremsbacke 1 mit unterschiedlichen Reibwerten versehen. Vorteilhafterweise besitzt der Reibbelag 3 in Zuspannrichtung 4 einen laminaren Aufbau (A - E), wobei jede der entstehenden Reibbelagschichten einen unterschiedlichen Reibwert aufweist. Angesichts des allgemeinen Zusammenhanges zwischen der Höhe des Reibwertes und der Neigung eines Reibbelages zur Geräuschentwicklung (insbesondere Bremsenquietschen) ist es vorteilhaft, den jeweiligen örtlichen Reibwert abhängig vom Reibbelagverschleiß einzustellen. Die Praxis zeigt, daß Bremsgeräusche vornehmlich im Neuzustand einer im Falle einer Fahrzeugbremse aus nicht gezeigter Bremsscheibe und Bremsbacke 1 bestehenden Reibpaarung auftreten. Um dieser unerwünschten Erscheinung zu begegnen, ist für die in Fig. 1 gezeigte Bremsbacke 1 vorgesehen, mit niedrigem Belagreibwert µ beginnend, diesen mit zunehmendem Belagverschleiß zu steigern. Der Zusammenhang zwischen Belagreibwert µ und Belagverschleiß ist für eine Bremsbacke nach Fig. 1 innerhalb eines Diagrammes in Fig. 2 dargestellt. Dabei ist zunächst zu erkennen, daß der Belagreibwert µ_{N} für die Belagschicht 7 (C - D) über einen großen Belagverschleißbereich konstant bleibt. Für diesen Bereich ist der eingefahrene Zustand der aus Bremsscheibe und Bremsbacke 1 bestehenden Reibpaarung erreicht und µ_{N} bezeichnet den in Abhängigkeit von der Bremsleistung bestimmten erforderlichen Nominalreibwert des gewählten Reibbelages. Innerhalb dieses Verschleißbereiches C - D besteht eine unkritische Reibpaarung, die üblicherweise nicht zur Entstehung von Bremsgeräuschen neigt.

Im Neuzustand der Reibpaarung, der häufig den für die Bremsgeräuschentstehung kritischen Zeitraum darstellt, ist bei der erfindungsgemäßen Bremsbacke 1 eine oberste Reibbelagschicht 5 vorgesehen (A - B), die gegenüber dem Nominalreibwert µ_{N} einen deutlich reduzierten Reibwert µ₁ aufweist. Der reduzierte Belagreibwert µ₁ im Neuzustand der Bremsbacke 1 verhindert trotz des erforderlichen Einlaufvorganges der Reibpaarung die Entstehung von Quietschgeräuschen. Eine Reduzierung des Belagreibwertes innerhalb der Belagschicht 5 auf etwa 50 % des Nominalreibwertes µ_{N} hat sich dabei als günstig erwiesen und läßt sich durch Aufbringen einer sehr dünnen Belageinlaufschicht (z.B. 0,2 mm) realisieren. Im Übergangszeitraum zwischen dem Einlaufvorgang der Reibpaarung und dem Erreichen des stabilen Betriebszustandes innerhalb der Belagschicht 7 ist eine dünne Belagschicht 6 vorgesehen, über deren Verschleißgrad entgegen der Zuspannrichtung 4 der Belagreibwert von µ₁ auf µ_{N} ansteigt (siehe Fig. 2). Innerhalb dieses Übergangsbereiches B - C geht das Einlaufverhalten in das normale und für die Bremsgeräuschentwicklung unkritische Betriebsverhalten der Bremse über.

Darüber hinaus gestattet die gezielte, in Abhängigkeit vom Belagverschleiß veränderliche Wahl des Belagreibwertes die Möglichkeit der Integration einer akustischen Belagverschleißwarnung durch gezielte Gestaltung des Reibbelages 3. Dazu wird bei sehr starkem Belagverschleiß innerhalb der Belagschicht 8 (D - E) der Belagreibwert über den Nominalreibwert µ_{N} angehoben. Bei Erreichen des Belagverschleißpunktes E ist schließlich der Belagreibwert µ₂ erreicht, der je nach Anwendung in seiner Größe derart gewählt ist, daß aufgrund seiner Größe ein Verschleißwarnton in Form von Bremsenquietschen erzeugt wird. Innerhalb der an den Belagträger 2 angrenzenden Reibbelagschicht 9 ist der Belagreibwert µ₂ gegenüber dem Nominalreibwert µ_{N} deutlich angehoben und konstant ausgeführt, womit durch den auftretenden Verschleißwarnton der erforderliche Austausch der verschlissenen Bremsbacken 1 angezeigt wird. Diese unmittelbar an den Belagträger 2 angrenzende Belagschicht 9 mit deutlich erhöhtem Belagreibwert zur Anzeige des erforderlichen Bremsbackenwechsels ist selbstverständlich für jede bisher bekannte Bremsbacke mit einheitlichem Belagreibwert über dem Verschleißmaß auf einfache Weise umsetzbar.

Die praktische Realisierung eines Belagreibwertverlaufes in Abhängigkeit vom Belagverschleiß, beispielsweise entsprechend der Fig. 2, ist auf unterschiedliche Art und Weise möglich. In einer ersten Variante können die gewünschten Belagreibwerte innerhalb der verschiedenen Reibbelagschichten 5,6,7,8,9 durch laminaren Aufbau des Reibbelages 3 aus unterschiedlichen Reibmaterialien mit den jeweiligen Materialeigenschaften erzielt werden. Eine andere Ausführung sieht vor die verschiedenen Reibwerteigenschaften durch Verwendung unterschiedlicher Reibmaterialien oder aber eines einheitlichen Reibmaterials mit unterschiedlicher Dichte zu bewerkstelligen. Bei Nutzung eines einzigen Reibmaterials kann die unterschiedliche Dichte beispielsweise durch die Größe der Preßkraft beim Aufbringen des Reibbelages 3 auf dem Belagträger 2 erzielt werden. Analog dazu können innerhalb des Reibbelagmaterials schwere Partikel enthalten sein, die sich im Verlauf des Herstellverfahrens der gesamten Bremsbacke 1 prozeßgesteuert in den einzelnen Reibbelagschichten absetzen und damit den verschleißabhängigen Dichteverlauf des Reibbelages 3 beeinflussen. Dabei setzen sich die eingeschlossenen schweren Partikel innerhalb der Reibbelagmasse im Verlauf des Herstellprozesses vornehmlich in der Reibbelagschicht 9 ab und bewirken durch eine örtliche Dichteerhöhung innerhalb dieser Schicht den erwünscht hohen Belagreibwert.

Zur Reduzierung von Geräuschen, die in erster Linie während des Einlaufvorganges der Reibpaarung auftreten, ist es von besonderer Bedeutung, die oberste Reibbelagschicht 5, die unmittelbar im Neuzustand der Bremsbacke 1 mit dem zugehörigen Reibpartner (Bremsscheibe) in Eingriff gerät, mit einem niedrigen Belagreibwert zu versehen. Dazu besteht die Möglichkeit, die oberste Reibbelagschicht mechanisch oder chemisch aufzurauhen, wodurch lokal die Reibbelagdichte und damit auch der Belagreibwert gesenkt wird. Die mechanische Aufrauhung der Reibbelagoberfläche kann auf einfache Weise durch Profilierung erfolgen, wobei die Art der Profilierung durch ein entsprechend gestaltetes Oberflächenprofil eines aufgepreßten Druckstempels aufgebracht wird (z.B. Riffelung, Rautenmuster etc.).

Durch geeignete chemische Behandlung der Reibbelagoberfläche kann ebenfalls eine poröse Struktur der obersten Reibbelagschicht 5 erzielt werden. Eine solche chemische Behandlung sieht in erster Linie ein kostengünstiges Eintauchen des Reibbelages in eine entsprechende, reibwertabsenkende Flüssigkeit vor, wodurch der gewünschte Effekt erzielt werden kann. Ein derartiges chemisches Eintauchverfahren für den Reibbelag kann bei geeigneter Auswahl der Eintauchflüssigkeit auch zur Reibwerterhöhung genutzt werden oder aber in einer Erweiterung der Anwendung gleichzeitig zur Konservierung der gesamten Bremsbacke 1 beitragen. Eine dergestalt ausgeführte Konservierung, die vor allem ein Festrosten der Bremsbacken an der Bremsscheibe verhindern soll, ist insbesondere vor dem Hintergrund zunehmender Fahrzeugstandzeiten sowie langwieriger Zuliefertransporte insbesondere von Neufahrzeugen bedeutsam.

In Fig. 3 sind zwei Ansichten einer entsprechend einer komplexen Erweiterung des Erfindungsgedankens gestalteten Bremsbacke 1 abgebildet, wobei die Bremsbacke 1 ebenfalls im wesentlichen aus einem Belagträger 2 sowie einem darauf aufgebrachten Reibbelag 3 besteht. Zusätzlich zu der variablen Reibwertfestlegung in Abhängigkeit des Reibbelagverschleißes ist für die Bremsbacke 1 in den Fig. 3a und 3b noch eine Aufteilung der jeweiligen Reibfläche in mehrere Reibzonen 10 vorgesehen, die jeweils einen unterschiedlichen Reibwert aufweisen können. Es läßt sich beispielsweise für jede Reibzone 10 der gesamten Reibfläche, die jeweils mit dem zugehörigen Reibpartner in Eingriff gerät, ein anderer Reibwert festlegen. In Fig. 3b ist eine entlang der Linie X-X aus Fig. 3a geschnittene Ansicht der Bremsbacke 1 erkennbar. Hieraus wird deutlich, daß die Möglichkeit einer komplexen dreidimensionalen Aufteilung des Reibbelages 3 in Bereiche unterschiedlichen Reibwertes besteht. Danach läßt sich der Reibbelag 3 beliebig, je nach Anwendungsfall hinsichtlich seines örtlichen Reibwertes gestalten und damit an die jeweiligen Erfordernisse anpassen. Dieses Prinzip ist äußerst flexibel anwendbar und selbstverständlich nicht auf die schachbrettartige Aufteilung der Reibfläche in Reibzonen 10 beschränkt. Es ist auch jede andere geometrische Aufteilung denkbar.

Der prinzipielle Grundgedanke der Erfindung ist nicht auf die lediglich in den Figuren gezeigten Anwendungen am Beispiel einer Bremsbacke 1 begrenzt. Die zielgerichtete Gestaltung des Reibbelages 3 hinsichtlich seines örtlichen Reibwertes ist auf jedes andere Reibelement einer Reibpaarung übertragbar. Beispielsweise ergeben sich weitere Anwendungen der Erfindung bei Reibkupplungen oder aber Trommelbremsbacken.

## Patentansprüche

1. Reibelement (1) einer Reibpaarung, insbesondere für eine Kraftfahrzeugbremse oder eine Reibkupplung, wobei das Reibelement (1) einen Belagträger (2) und einen darauf befestigten Reibbelag (3) besitzt, dadurch **gekennzeichnet,** daß der Reibbelag (3) je nach Verschleißgrad einen veränderlichen Reibwert µ aufweist.

2. Reibelement (1) nach Anspruch 1, dadurch **gekennzeichnet,** daß das Reibelement (1) als Kupplungsscheibe einer Reibkupplung ausgebildet ist.

3. Reibelement (1) nach Anspruch 1, dadurch **gekennzeichnet,** daß das Reibelement (1) als Bremsbacke (1) einer Kraftfahrzeugbremse ausgeführt ist.

4. Reibelement (1) nach einem der vorhergehenden Ansprüche, dadurch **gekennzeichnet,** daß der örtliche Reibwert µ des Reibbelages (3) mit zunehmendem Verschleiß des Reibbelages (3) ansteigt.

5. Reibelement (1) nach einem der vorhergehenden Ansprüche, dadurch **gekennzeichnet,** daß der Reibbelag (3) senkrecht zur Belagträgerfläche einen laminaren Aufbau besitzt.

6. Reibelement (1) nach einem der vorhergehenden Ansprüche, dadurch **gekennzeichnet,** daß die örtliche Reibbelagdichte mit zunehmendem Verschleißmaß des Reibbelages (3) ansteigt.

7. Reibelement (1) nach einem der vorhergehenden Ansprüche, dadurch **gekennzeichnet,** daß die dem Belagträger (2) abgewandte, oberste Reibbelagschicht (5) eine poröse Struktur aufweist.

8. Reibelement (1) nach einem der vorhergehenden Ansprüche, dadurch **gekennzeichnet,** daß die dem Belagträger (2) abgewandte, oberste Reibbelagschicht (5) an der Oberfläche mechanisch oder chemisch aufgerauht bzw. geglättet ist.

9. Reibelement (1) zumindest nach Anspruch 5, dadurch **gekennzeichnet,** daß der Reibbelag (3) innerhalb seiner laminaren Schichten Reibzonen (10) mit unterschiedlichem Reibbelagreibwert µ aufweist.
